Europäisches Patentamt

European Patent Office

Office européen des brevets

(19)

(11) Numéro de publication : **0 135 446**
**B1**

## (12) FASCICULE DE BREVET EUROPÉEN

(45) Date de publication du fascicule du brevet :
**15.06.88**

(21) Numéro de dépôt : **84401813.5**

(22) Date de dépôt : **13.09.84**

(51) Int. Cl.⁴ : **C 03 B   5/027, C 03 B   3/00,
C 03 B   5/18, C 03 B   5/187,
C 03 B   5/225, C 03 B   5/235**

(54) Procédé et dispositif pour elaboration de verre fondu, et applications de ce dispositif.

(30) Priorité : **14.09.83 FR 8314603**

(43) Date de publication de la demande :
**27.03.85 Bulletin 85/13**

(45) Mention de la délivrance du brevet :
**15.06.88 Bulletin 88/24**

(84) Etats contractants désignés :
**AT BE CH DE FR GB IT LI LU NL SE**

(56) Documents cités :
**EP-A- 0 003 247**
**BE-A-   894 795**
**CH-A-   260 256**
**DE-A- 2 847 150**
**FR-A- 1 542 571**
**FR-A- 2 201 261**
**FR-A- 2 281 902**
**FR-A- 2 340 911**
**LU-A-    53 674**
**US-A- 2 283 188**
**US-A- 2 294 373**
**US-A- 2 371 213**
**US-A- 3 850 606**
**US-A- 3 951 635**
**US-A- 3 988 138**

(73) Titulaire : **SAINT-GOBAIN VITRAGE
Les Miroirs 18, avenue d'Alsace
F-92400 Courbevoie (FR)**

(72) Inventeur : **Barton, James
56, rue de Boulainvilliers
F-75016 Paris (FR)**
Inventeur : **Baufume, Michel
28, rue Poncelet
F-75017 Paris (FR)**

(74) Mandataire : **de Toytot, Robert et al
SAINT-GOBAIN RECHERCHE 39 quai Lucien Lefranc
F-93300 Aubervilliers (FR)**

Jouve, 18, rue St-Denis, 75001 Paris, France

## Description

La présente invention a trait à un procédé et un·dispositif de fabrication de verre fondu et intéresse plus spécialement la technique de fabrication mettant en œuvre le processus d'affinage rapide décrit par les brevets français FR-A-2 281 902, 2 340 911 et 2 423 452.

Ces brevets concernent un procédé de fusion et d'affinage du verre permettant de réduire à une durée de l'ordre de l'heure le temps total de fabrication du verre fondu affiné livré au formage, compté à partir de l'enfournement des matières vitrifiables. Ce procédé consiste essentiellement en ce que ces matières sont tout d'abord chauffées de manière à obtenir leur fusion sommaire, sous la forme d'une masse vitreuse brute présentant une viscosité au plus égale à 100 Pa · s (1 000 poises), puis ladite masse vitreuse est soumise à un échauffement dont la vitesse est réglée pour provoquer son moussage intense selon un taux d'expansion d'au moins 1,5 dans tout son volume, la viscosité étant maintenue au-dessous de 100 Pa · s (1 000 poises) jusqu'à affaissement de la mousse. A ce moment, un verre parfaitement affiné peut être recueilli.

Un tel procédé présente de grands avantages, les installations qui permettent de le mettre en œuvre étant d'un faible encombrement comparées à celles des fabrications traditionnelles, pour une même capacité de production : il en résulte notamment, pour les installations elles-mêmes, un gain en souplesse de fonctionnement et en facilité de réglage, et, pour le verre produit, un moindre coût en énergie et en amortissement des investissements.

Les dispositifs décrits par les brevets cités ci-dessus comportent des fondoirs de structures visant à mettre en œuvre une fusion en couche mince, au moyen de gaz chauds animés de grandes vitesses. De la sorte, pour chacune des variantes proposées, l'augmentation de la capacité de fusion ne peut guère résulter que d'une extrapolation de la surface exposée aux gaz chauds. Or, pour augmenter ladite surface, il n'est possible de jouer, dans le cas des soles fixes tout au moins, que sur l'une seulement de ses dimensions, à savoir la largeur de la sole, alors qu'une augmentation du débit de l'affineur est susceptible d'être obtenue par une extrapolation en volume, ou tout au moins en surface.

Par ailleurs, les matières premières destinées à être traitées par de tels fondoirs se présentent nécessairement sous forme agglomérée, ce qui impose des installations comportant une infrastructure spécifique minimale dont le coût pénalise évidemment plus les petites unités de fabrication que les grosses.

La présente invention se propose de remédier à ces quelques contraintes, et de fournir un procédé et un dispositif susceptibles de satisfaire une grande diversité de besoins, correspondant aussi bien à de petites unités de fabrication de verre fondu, intéressant, par exemple, le flaconnage ou le fibrage, qu'à des unités beaucoup plus importantes, destinées par exemple à la bouteillerie ou au verre plat.

L'invention a ainsi tout d'abord pour objet un procédé de fabrication de verre fondu comprenant une étape dite de fusion sommaire d'un mélange vitrifiable produisant une masse vitreuse brute présentant une viscosité au plus égale à 100 Pa · s (1 000 poises) et contenant un agent affinant, une étape dite d'affinage rapide soumettant ladite masse vitreuse brute à un échauffement réglé pour provoquer un moussage convectif de ladite masse vitreuse brute dans tout son volume avec un taux d'expansion de 1,5 au moins, et une étape de récupération et conditionnement du verre affiné obtenu, caractérisé en ce que l'étape de fusion sommaire comporte une action de dispersion visant une mise en contact intime en un mélange homogène, de matières vitrifiables solides, constituant une phase dite solide, avec des matières vitrifiables en fusion, constituant une phase dite fondue, ledit mélange formant un bain en fusion de ladite masse vitreuse brute, et en ce que, en vue de la soumettre à l'étape de moussage convectif, ladite masse vitreuse brute est prélevée à la partie inférieure dudit bain en fusion, et introduite à la partie inférieure d'un bain auquel est appliqué ledit échauffement provoquant le moussage convectif.

En outre, l'introduction de ladite masse vitreuse brute dans le bain soumis au moussage convectif est effectuée de préférence selon un flux ascendant.

De manière avantageuse, ladite action de dispersion de ladite phase solide dans ladite phase fondue comporte de préférence un intense brassage, provoqué commodément par une action mécanique, lesdites matières solides se présentant avantageusement, avant dispersion, sous forme pulvérulente.

Selon un premier mode d'exécution du procédé de l'invention, lesdites phase solide et phase fondue, mises mutuellement en contact intime, sont de compositions différentes, et ajustées l'une à l'autre, de même que leurs proportions relatives, de manière propre à conduire à la composition finale globale souhaitée pour ladite masse vitreuse brute apte à être soumise au processus dit d'affinage rapide.

Un tel mode d'exécution sera spécialement avantageux, notamment, lorsqu'est disponible à un faible coût la phase liquide, par exemple sous la forme de sous-produits de l'industrie, tels que laitiers de haut-fourneau. Utilisant lesdits laitiers sur les lieux mêmes de production, sans refroidissement intermédiaire, l'énergie qui serait nécessaire à leur fusion se trouve économisée.

Ce même mode d'exécution pourra également être choisi avantageusement à titre de perfectionnement du procédé du brevet français FR-A-2 058 439 préconisant de présenter de manière distincte, dans le mélange vitrifiable, les porteurs de métaux alcalins et les porteurs de métaux alcalino-terreux, chacun sous forme de silicates et/ou d'aluminosilicates, les premiers constituant alors essentiellement la phase solide et les seconds la phase fondue.

On trouvera en outre avantage, notamment dans ce dernier cas, à faire appel à un silicate alcalin artificiel du type décrit dans le brevet FR-A-1 469 109, présentant de préférence un rapport molaire $SiO_2/Na_2O$ compris entre 2 et 6, pour constituer tout ou partie de la phase solide.

De préférence encore, les composés destinés à l'affinage du verre sont introduits dans le mélange essentiellement grâce aux matières solides, ce qui permet d'optimiser leur apport.

Selon un autre mode d'exécution du procédé de l'invention, lesdites phase solide et phase fondue sont de même composition globale finale, la phase fondue résultant tout simplement du déroulement préalable, plus ou moins achevé, des réactions accompagnant la fusion de la phase solide.

Selon une première forme de mise en œuvre de ce mode d'exécution, après la mise en contact par dispersion rapide des deux phases, de préférence avec brassage, éventuellement mécanique, une fraction de la masse vitreuse brute obtenue est prélevée, en vue du traitement ultérieur d'affinage rapide, puis une quantité de phase solide équivalente à ladite fraction prélevée est introduite et dispersée dans le mélange restant, dans un nouveau cycle d'élaboration de masse vitreuse brute.

Selon une forme de mise en œuvre généralement préférée, il est prévu de travailler non par fournées successives, mais selon un processus continu de prélèvement de ladite masse vitreuse brute et d'introduction desdites matières vitrifiables pulvérulentes, de même que pour l'ensemble des phases du traitement ultérieur d'affinage rapide et de conditionnement conduisant à la livraison du verre affiné apte au formage.

Dans ses diverses formes de mise en œuvre, l'invention préconise que le chauffage dudit mélange soit effectué par voie électrique, de préférence par effet Joule direct, c'est-à-dire par passage de courant électrique dans la masse à chauffer elle-même. Bien que, en ce domaine, le chauffage par induction haute fréquence, par exemple, ne soit pas à écarter dans le cadre de l'invention, le plus pratique généralement sera de faire appel à des amenées de courant, ou électrodes, venant en contact avec le bain pour créer un champ et des courants électriques en son sein.

Le mélange des matières solides au bain effectué en mettant en œuvre une vigoureuse agitation, de préférence mécanique, produisant un renouvellement très rapide de la matière en contact avec les électrodes, conduit à une atténuation de la surchauffe des zones voisines des électrodes, et donc à un accroissement de la densité de courant admissible, rapportée à la surface active desdites électrodes, et à une réduction de leur usure, ainsi qu'à une accélération de l'échauffement des matières vitrifiables solides introduites dans le bain fondu. Il en résulte en outre une rapide dispersion de ces matières au sein du bain, c'est-à-dire l'obtention d'une masse vitreuse de bonne homogénéité, dès une faible distance du point d'introduction desdites matières vitrifiables.

Par ailleurs, les qualités d'homogénéité du mélange et l'élimination d'une bonne part des gaz provenant des matières vitrifiables sont favorisées par les mesures visant, selon la présente invention, à effectuer l'introduction des matières vitrifiables solides par la partie supérieure du bain en fusion, et l'extraction de la masse vitreuse brute par sa partie inférieure.

Les étapes ultérieures du procédé de l'invention, expansion convective, affinage, homogénéisation et conditionnement, peuvent être appliquées à la masse vitreuse brute ainsi préparée de la manière décrite par les trois premiers brevets français cités ci-dessus. Il doit être noté que, contrairement à ce que lesdits brevets recommandaient, ladite masse vitreuse, à ce stade, présente une notable hétérogénéité quant à son passé thermique à l'échelle des dimensions des solides introduits, du fait qu'elle résulte essentiellement d'une opération de mélange, avec ajout et extraction en continu. Pourtant, de manière inattendue, on constate que la qualité du verre affiné auquel elle conduit est au moins équivalente, sinon supérieure à celle obtenue par les techniques antérieures, qui faisaient appel à des fondoirs à flammes.

La présente invention a d'autre part pour objet un dispositif de fabrication de verre fondu comprenant un fondoir susceptible d'élaborer une masse vitreuse brute présentant une viscosité au plus égale à 100 Pa · s (1 000 poises) apte à subir un affinage rapide au moyen d'un échauffement réglé pour provoquer son moussage convectif selon un taux d'expansion de 1,5 au moins, dans tout son volume, un bassin allongé muni dans sa partie amont, recevant ladite masse vitreuse brute dudit fondoir, de moyens de chauffage capables de lui procurer ledit échauffement, caractérisé en ce que ledit fondoir comporte des moyens de dispersion visant la mise en contact intime, en un mélange homogène, de matières premières vitrifiables solides, constituant une phase dite solide, avec des matières vitrifiables en fusion, constituant une phase dite fondue, et une cuve d'homogénéisation pour contenir ladite masse vitreuse brute, en un bain en fusion, provenant dudit mélange, ladite cuve comportant à sa partie inférieure un orifice d'un conduit menant au bassin destiné au moussage convectif de ladite masse vitreuse brute, ledit conduit débouchant dans la partie inférieure dudit bassin de moussage convectif.

Dans une première forme d'exécution du dispositif de l'invention visant à la mise en œuvre du procédé selon le premier mode décrit plus haut, lesdits moyens de dispersion comprennent, de préférence en combinaison, des moyens d'alimentation en bain fondu, recevant ce dernier d'une source appropriée, et des moyens d'alimentation en matières solides complémentaires, de préférence munis de moyens de réglage de débit pour ajuster les proportions des phases solide et fondue à mettre en contact.

Dans une autre forme d'exécution du dispositif de l'invention, visant à la mise en œuvre d'une variante selon laquelle la phase fondue résulte simplement du déroulement préalable, plus ou moins achevé, du processus de fusion de la phase solide, la cuve d'homogénéisation comprend, de préférence en combinaison, des moyens de brassage, et des moyens d'alimentation de ladite cuve en matières vitrifiables solides.

Selon l'une ou l'autre des formes d'exécution mentionnées ci-dessus, la cuve d'homogénéisation munie de moyens de brassage permet d'obtenir rapidement une dispersion homogène desdites matières solides au sein dudit bain fondu.

La cuve d'homogénéisation comprend en outre, avantageusement dans la première forme d'exécution mentionnée ci-dessus, et impérativement dans la seconde, des moyens de chauffage du bain vitreux, lesdits moyens étant de préférence électriques, de manière à dissiper l'énergie au sein même de la matière fondue : induction haute fréquence, résistances immergées, ou de préférence effet Joule direct au travers de la matière fondue par l'intermédiaire d'électrodes ou amenées de courant électrique immergées dans ladite matière.

De manière avantageuse, les moyens de brassage et les moyens électriques dissipant l'énergie, résistances ou électrodes immergées, présentent une disposition mutuelle telle que le renouvellement de la matière au contact desdits moyens de dissipation d'énergie soit accéléré par rapport à celui que produirait la seule convection thermique naturelle, cette accélération étant maximale au niveau des régions où cette dissipation est elle-même maximale.

Les moyens de brassage comportent de préférence au moins un organe mécanique animé d'un mouvement présentant au moins une composante de rotation d'axe vertical.

Dans la cuve d'homogénéisation, la disposition mutuelle des points d'introduction des matières vitrifiables et d'extraction de la masse vitreuse brute à livrer à l'affinage est prévue de manière à favoriser l'action d'homogénéisation des organes de brassage sur la totalité de la matière transitant par ladite cuve, l'alimentation en matières vitrifiables solides se faisant par déversement sur le bain fondu, et l'extraction par le fond de la cuve.

Bien que ladite cuve d'homogénéisation puisse, selon l'invention, affecter la forme d'un canal, au long duquel peuvent être répartis plusieurs agitateurs et plusieurs jeux d'électrodes de chauffage, l'alimentation dudit canal se faisant à une extrémité et l'extraction à l'autre, elle sera choisie en général de préférence de la forme générale d'un cylindre d'axe vertical, de manière à favoriser, par l'extraction en partie basse, le prélèvement de la fraction la plus dense de la masse vitreuse brute élaborée dans ladite cuve d'homogénéisation.

Les moyens de brassage et les moyens électriques de dissipation d'énergie peuvent, dans le cadre de l'invention, se présenter sous une forme combinée s'inspirant du type décrit par le brevet US-A-2 859 261, comportant trois électrodes disposées selon un triangle équilatéral, pénétrant au travers de la sole dans le bain fondu, en rotation sur elles-mêmes au-dessous de la motte de composition.

Les électrodes peuvent également, avantageusement, être suspendues et présenter une forme favorisant certains mouvements de la matière, comme selon le brevet US-A-3 539 691, dont, le dispositif comporte des électrodes suspendues dont l'une au moins affecte une forme d'aube, et est entraînée en rotation par rapport à son axe de symétrie.

L'invention peut encore faire appel à des électrodes fixes, disposées à la périphérie d'un bassin, combinées à une électrode centrale rotative à pales, selon une structure décrite par les brevets FR-A-2 201 261 et US-A-3 754 886, ou même selon celle décrite par les brevets US-A-3 850 606 et 3 988 138, qui combine au mouvement de rotation sur elle-même de ladite électrode centrale un mouvement circulaire dans un plan vertical, comportant un déplacement pour partie hors du bain et pour partie dans le bain.

Globalement, la complexité de ces dernières solutions, qui en tout état de cause ne peuvent être utilisées sans les adaptations qui découlent des caractéristiques propres à la présente invention, ne semble pas toujours compensée par les avantages qui leur sont propres, et les caractéristiques et avantages principaux de l'invention correspondent généralement à des dispositifs plus simples, et en outre plus fiables, dont des exemples de réalisation seront décrits ci-après en référence aux dessins annexés, qui représentent :

— Figure 1 : une vue partielle schématique, en coupe longitudinale, d'un organe de prémélange à déversoir annulaire, visant à effectuer une alimentation continue de la cuve de mélange en matières premières, celles-ci comprenant, intimement mêlés, le bain fondu et les matières solides complémentaires,

— Figure 2 : une vue schématique, en coupe longitudinale, d'un dispositif selon l'invention dans lequel la cuve de mélange est munie de moyens d'alimentation en matières vitrifiables solides,

— Figure 3a : une vue schématique en plan du dispositif de l'invention, montrant une première variante de disposition des électrodes,

— Figures 3b et 3c : des vues similaires d'autres variantes de dispositions des électrodes,

— Figure 4 : une vue schématique partielle, en coupe longitudinale, d'un dispositif selon l'invention muni de moyens de récupération de chaleur et de matières volatiles.

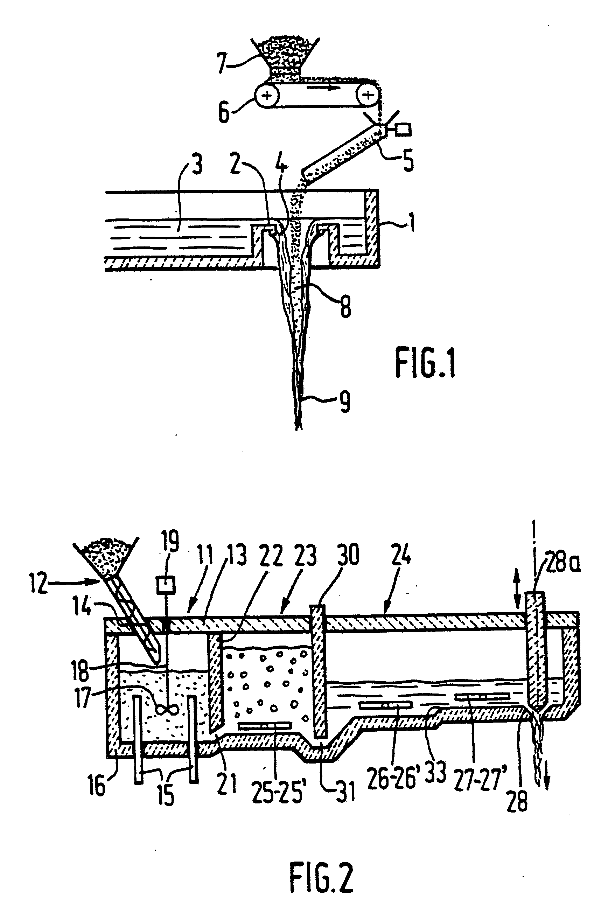

L'organe de prémélange représenté à la figure 1 comporte essentiellement, à l'extrémité d'un canal 1, un déversoir annulaire 2 au-dessus duquel le bain fondu 3 amené par le canal déborde en formant une nappe tubulaire 4 qui, dans sa chute, s'étire avec une réduction concomitante de section.

Une goulotte vibrante 5, recevant les matières solides complémentaires d'une courroie-peseuse 6, à partir d'une trémie 7, les introduit en un jet 8 à l'intérieur de la nappe tubulaire 4, de telle sorte que lesdites matières se trouvent dispersées sur sa surface interne, et entraînées au sein même de la phase liquide, dans le filet 9.

Le filet 9 est susceptible d'être directement introduit dans une cuve d'homogénéisation d'un dispositif selon l'invention, par exemple du type de la cuve 11 représentée à la figure 2, où sont effectués un intense brassage et l'ajustement de la température au niveau souhaité. On n'a pas jugé utile de représenter sur une figure spéciale la structure qui permet cette adaptation de la cuve d'homogénéisation 11 de la figure 2 à l'organe de prémélange qui est représenté à la figure 1. Une telle structure résultera tout simplement de la substitution dudit organe de prémélange à l'organe d'alimentation en matières solides 12 utilisé par le dispositif selon l'invention représenté à la figure 2. Il suffit de prévoir pour le passage du filet 9, dans la voûte 13 de la cuve 11, un orifice analogue à l'orifice 14 ménagé pour ledit organe 12.

On conçoit que cette structure de prémélange présente de grands avantages par rapport à celle qui ferait appel à deux organes d'alimentation indépendants, l'un pour le bain fondu et l'autre pour les matières solides : le contact intime entre les matériaux réalisés dès le filet 9 réduit les envols de solides, et la très bonne dispersion accélère l'équilibrage thermique entre les phases en présence.

Le dispositif spécifiquement représenté à la figure 2 sera maintenant décrit plus en détail.

La cuve d'homogénéisation 11, de section horizontale de préférence hexagonale, comporte essentiellement un jeu d'amenées de courant 15, représentées traversant la sole 16, des moyens d'agitation, consistant par exemple en une hélice 17 entraînée en rotation par l'arbre 18 d'un moteur 19 et un organe d'alimentation 12 en matières solides.

L'hélice 17, fabriquée en un matériau réfractaire de bonne résistance à la flexion et à l'abrasion, et de bonne résistance à la corrosion par le verre, tel que le molybdène, ou des réfractaires par exemple à la zircone, possédera de préférence un nombre pair de pales, l'inclinaison d'une pale étant alors avantageusement de sens inverse de celle de ses voisines immédiates. Les moyens d'entraînement de l'hélice 17 prévoient avantageusement une inversion périodique de sens de rotation.

L'arbre 18 comporte avantageusement une circulation interne de fluide de refroidissement, afin de garantir ses propriétés mécaniques.

L'introduction des matières premières solides se faisant grâce à l'organe d'alimentation 12 au travers de la voûte 13, par l'orifice 14 disposé au voisinage de l'arbre 18 de l'agitateur, l'extraction de la masse vitreuse est effectuée avantageusement par au moins un orifice latéral 21 ménagé à l'opposé, en partie basse de la paroi 22 qui sépare la cuve 11 d'un compartiment de moussage 23, lui-même suivi d'un compartiment d'homogénéisation et de conditionnement 24.

Dans les compartiments 23 et 24 s'effectuent les diverses opérations transformant la masse vitreuse brute en un verre affiné et homogène, apte au formage, selon le processus décrit dans les trois brevets français cités en préambule à la présente description.

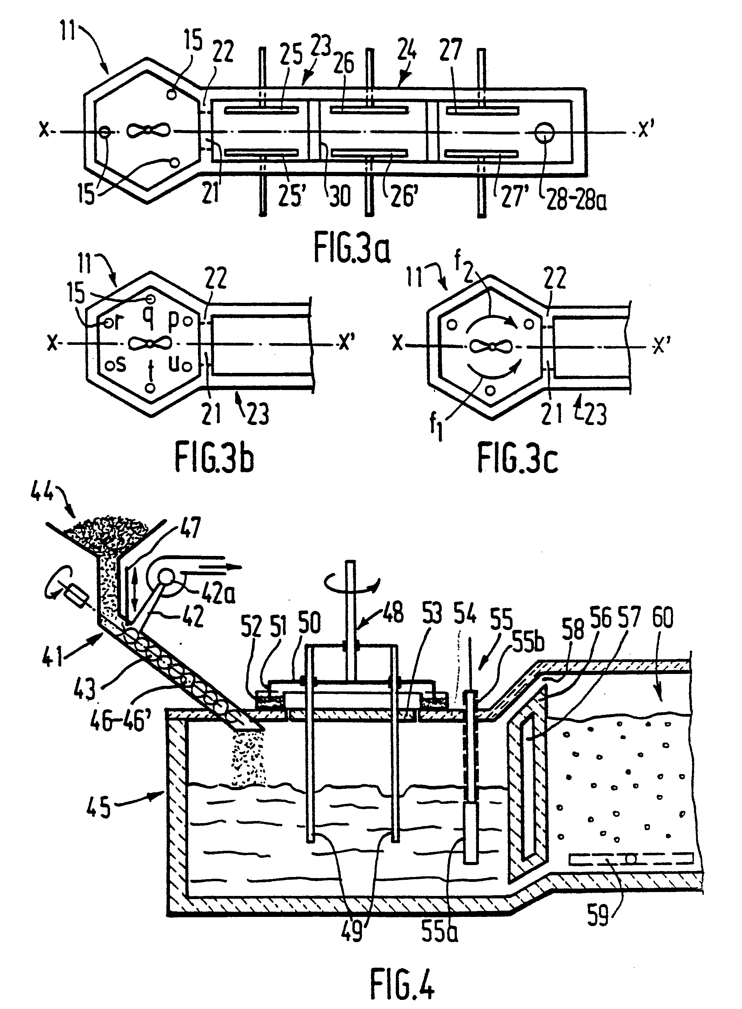

Ces compartiments 23 et 24 sont eux-mêmes avantageusement chauffés par voie électrique, par exemple comme représenté sur les figures 2 et 3a, au moyen d'électrodes disposées au voisinage de la sole de ces compartiments, parallèlement aux parois longitudinales, électrodes repérées respectivement 25-25' pour le compartiment 23, et 26-26' et 27-27' pour le compartiment 24. Un orifice de soutirage 28 muni d'un poinçon 28a est ménagé à l'extrémité aval de la sole du compartiment 24 pour extraire le verre en vue de son formage.

Les électrodes d'amenée de courant 15 dans la cuve 11 seront généralement, selon une solution peu coûteuse, au nombre de trois, permettant une alimentation en courant alternatif triphasé.

Pour obtenir une durée de vie maximale des électrodes et de l'agitateur lorsque ses pales sont à inclinaison alternée, il a été constaté qu'il était avantageux d'inverser périodiquement le sens de rotation de l'agitateur. En vue de cette éventualité, on dispose avantageusement les électrodes de manière symétrique par rapport au plan vertical de symétrie de l'installation. Ce plan étant représenté par son intersection x-x' avec un plan horizontal sur les figures 3a, 3b et 3c comparant différentes dispositions possibles d'électrodes, on voit que la configuration de la figure 3a, avec trois électrodes placées chacune au voisinage du milieu d'un côté de l'hexagone, l'une située à l'opposé de l'orifice 21 et les deux autres en regard des deux côtés encadrant ledit orifice, convient bien à cette éventualité.

Il en est de même de la configuration représentée par la figure 3b, comportant six électrodes, une au voisinage de chacun des angles de l'hexagone, qui peuvent être accouplées en parallèle alimentées en triphasé selon le schéma p-q, r-s, t-u ou mieux p-s, q-t, r-u, ce dernier couplage procurant une moindre impédance et une moindre dérivation de courant par les parois.

Une alimentation en monophasé peut également s'appliquer à la configuration de la figure 3b, par paires indépendantes : p-q, r-s, ... ou, mieux encore : p-u, q-r et s-t, cette dernière variante permettant une meilleure maîtrise de la température de la matière franchissant l'orifice 21.

La figure 3c représente une configuration à trois électrodes disposées en triangle équilatéral, chacune à un angle de l'hexagone et par conséquent de manière non symétrique par rapport au plan x-x'. Il a été constaté que le sens de rotation de l'agitateur n'était pas indifférent : mises à part les considérations relatives à l'usure des électrodes, la rotation selon le sens de la flèche $f_1$ est à préférer, généralement, à celui de la flèche $f_2$ du fait qu'elle permet des températures de sole plus faibles, et de gorge plus homogènes, et donc une usure réduite.

On remarquera sur les figures 2 et 3a que les compartiments de moussage 23 et de conditionnement 24 sont délimités mutuellement par une cloison 30, au pied de laquelle un ou plusieurs orifices de passage 31 sont ménagés pour l'écoulement du matériau vitreux vers l'aval. Alors que l'orifice 21 réunissant la cuve de mélange 11 et le compartiment de moussage 23, présente une pente ascendante vers l'aval,

5

formant avec l'horizontale un angle de préférence supérieur à 45°, l'orifice 31 au-dessous de la cloison 30 affecte avantageusement la forme d'une gorge sous-marine, permettant de soutirer préférentiellement les couches les plus denses de la matière contenue dans le compartiment 23. Un ou plusieurs seuils, tels que 33, peuvent ensuite être prévus dans la sole du compartiment de conditionnement 24 pour y favoriser l'homogénéisation du verre affiné.

Il a été observé que, contrairement à ce qui pouvait être attendu, un tel profil de sole favorisait l'écoulement piston du matériau vitreux.

Selon la variante d'exécution de l'invention représentée par la figure 4, il est prévu une récupération d'une partie de la chaleur sensible et éventuellement de certains éléments contenus dans les gaz, et/ou certaines matières volatiles, et certaines poussières, désignés ci-après sous la dénomination globale de « fumées », qui sont émis par les matériaux au cours de l'élaboration du verre. En outre, une variante d'agitateur permettant une vitesse de rotation moindre que celle de l'agitateur à pales centrales est proposée.

Le dispositif représenté à la figure 4 comporte en effet un organe d'alimentation 41 comprenant une dérivation 42 pour le prélèvement des fumées à l'aide d'un ventilateur 42a, vers un cyclone d'épuration, non représenté : lesdites fumées sont ainsi extraites, à contre-courant des matières solides vitrifiables, par le conduit 43 raccordant la trémie 44 à la cuve 45.

Le conduit 43 contient avantageusement deux vis sans fin 46-46' disposées côte à côte parallèlement et tournant en sens inverse. Afin de faciliter le passage des gaz et de maîtriser leur perte de charge dans le conduit 43, il est prévu, de préférence, de régler le taux de remplissage du conduit 43 par les matières solides, au moyen d'un registre 47 disposé au pied de la trémie 44, et de ménager des lumières dans les hélices 46-46'.

Le conduit 43, ainsi équipé, se comporte comme un capteur de matières volatiles condensables et de particules légères, et comme un échangeur thermique.

La nécessaire étanchéité aux gaz de la cuve 45 exige des précautions au niveau des moyens de manœuvre de l'organe de brassage. Si celui-ci est mis en œuvre par un arbre traversant la voûte, on ajustera le diamètre de l'orifice ménagé dans la voûte à celui de l'arbre, de manière à réduire au minimum l'aspiration d'air extérieur par cet orifice.

L'organe de brassage représenté à la figure 4 comporte une tournante 48 munie de doigts verticaux 49 en réfractaire pour le mélange des matières contenues dans la cuve 45, dont l'usure est généralement moindre que celle d'une hélice, et la fabrication moins coûteuse. Les doigts 49 peuvent être constitués de métal réfractaire, et comporteront alors avantageusement des moyens de refroidissement internes. Des pales amovibles pourront leur être adaptées, réglables en altitude.

Un couvercle rotatif 50, en acier réfractaire, solidaire de ladite tournante 48, et comportant une jupe 51, est combiné à une gouttière concentrique fixe 52, solidaire de la cuve 45 et contenant un lit de sable, éventuellement fluidisé, dans lequel plonge la jupe 51, de manière à assurer l'étanchéité aux gaz de la cuve 45.

Une voûte isolante rotative 53 est suspendue à la tournante 48, de manière à compléter le rôle de la voûte isolante fixe 54.

La cuve 45 est équipée d'électrodes verticales 55 du type suspendues, comportant des moyens de réglage, plus particulièrement en hauteur, et elles sont susceptibles d'être disposées selon l'une des configurations représentées par les figures 3.

Ces électrodes comportent une partie immergée 55a en molybdène ou en graphite, la partie 55b, presqu'entièrement extérieure au bain, étant munie d'un revêtement externe de protection contre l'oxydation, constitué par exemple d'une coquille en réfractaire.

La cloison 56 séparant la cuve 45 du compartiment de moussage 60 comporte un vide intérieur 57 muni de moyens de refroidissement non représentés permettant de maîtriser indépendamment la température de chacune de ses faces.

A sa partie supérieure, au moins un orifice 58 réunit les atmosphères de la cuve 45 et du compartiment 60 de manière à permettre l'aspiration des gaz provenant du moussage, en vue de leur traitement par l'échangeur 41. Ce même orifice 58 peut éventuellement servir de trop plein de sécurité pour le verre en expansion dans le compartiment 60.

Un tel dispositif de récupération permet une économie d'environ 10 % sur l'énergie totale nécessaire à la fusion proprement dite du verre, ce qui est très appréciable.

Divers exemples d'application de dispositifs selon l'invention seront maintenant donnés afin de mettre en évidence les avantages qu'elle est susceptible de procurer.

## Exemple 1

On a utilisé un dispositif du type représenté par les figures 2 et 3 pour fondre un verre de composition classique pour la fabrication de verre flotté.

La composition du mélange vitrifiable soumis au traitement est donnée ci-après, en poids pour 1 tonne de verre fondu, ainsi que la composition finale visée du verre, en % en poids :

| | | | | |
|---|---|---|---|---|
| Sable | 702 kg | $SiO_2$ | 71,4 % | |
| Feldspath | 21 | $SO_3$ | 0,3 | |
| $Na_2CO_3$ | 240 | $Al_2O_3$ | 0,4 | |
| Dolomie | 202 | $Fe_2O_3$ | 0,08 | |
| Calcaire | 56 | CaO | 9,6 | |
| $Na_2SO_4$ | 7,1 | MgO | 4,05 | |
| | | $Na_2O$ | ) | 14,1 |
| | | $K_2O$ | ) | |

L'installation, visant une production journalière nominale de 3,6 t/d de verre fondu, correspond aux paramètres principaux mentionnés ci-après.

La cuve de mélange 11 affecte la forme d'un prisme droit d'axe vertical, de section intérieure hexagonale, de 0,28 m de côté et 0,204 m² de surface de sole, et dont la capacité utile d'environ 0,1 m³ correspond à une hauteur de 0,5 m environ occupée par la masse vitreuse en cours de brassage.

Elle est munie de trois électrodes verticales suspendues au travers de la voûte, dont la partie conductrice immergée, de molybdène ou de graphite, possède un diamètre de 0,04 m et une longueur de 0,16 m et atteint un niveau situé à 0,04 m de la sole.

L'agitateur est constitué d'une hélice de molybdène à 4 pales d'inclinaison alternée, selon un angle de 45°, d'une envergure de 0,27 m et d'une hauteur de 0,1 m. Cette hélice est éloignée de la sole, de préférence, d'environ 0,26 m.

La hauteur du bain de verre, en régime de veille, est d'environ 0,25 m.

Le compartiment 23, destiné au moussage expansif, possède une sole rectangulaire d'une longueur d'environ 0,5 m et d'une largeur d'environ 0,25 m. Compte-tenu d'une différence de niveau d'environ 0,07 m par rapport à la sole de la cuve de mélange, la hauteur de pâte, en régime de veille, est d'environ 0,18 m ; la hauteur totale de la pâte en cours de moussage convectif est de l'ordre de 0,36 m, correspondant à un taux d'expansion de 2/1, mais la voûte est avantageusement à une hauteur de l'ordre de 0,5 m au-dessus de la sole, pour permettre des taux d'expansion supérieurs, ainsi que la mise en œuvre éventuelle de brûleurs pour certaines phases transitoires du fonctionnement.

Le compartiment d'homogénéisation 24, relié au compartiment 23 par une gorge 31 surbaissée, c'est-à-dire telle que la cloison 30 descend jusqu'au niveau de la sole du compartiment 23, possède une longueur de 0,55 m, une largeur de 0,25 m et la hauteur nominale du verre y est de 0,18 m, les soles des deux compartiments étant au même niveau.

Le chauffage des deux compartiments 23 et 24 est obtenu au moyen, pour chacun, de deux électrodes horizontales de 0,25 m de long et de diamètres, respectivement 0,04 et 0,025 m, disposées transversalement à proximité des parois amont et aval de chacun des compartiments et à environ 0,03 m de la sole.

Une production d'environ 3,6 t/d de verre affiné de ladite composition classique pour fabrication de verre flotté, contenant moins de 30 bulles supérieures à 30 microns par kg de verre, c'est-à-dire d'une très bonne qualité pour le flaconnage, a été tirée de cette installation dans les conditions ci-après :

- Cuve de mélange 11 :
  . vitesse de rotation de l'hélice : 200 tours/min,
  . puissance électrique dissipée par les électrodes : 150 kW,
  . température de la masse vitreuse extraite : 1 370 °C ;
- Compartiment d'affinage 23 :
  . puissance dissipée par les électrodes : 32 kW,
  . température moyenne de la mousse en expansion convective : 1 500 °C,
  . taux d'expansion : 2,1 ;
- Compartiment d'homogénéisation 24 :
  . puissance dissipée par les électrodes : 21 kW,
  . température du verre extrait : 1 480 °C.

Le temps de passage moyen au travers de l'ensemble du dispositif, correspondant au rapport masse contenue/débit, est de l'ordre de 90 minutes, ce qui témoigne des excellentes possibilités d'affinage du dispositif de l'invention, pour une tirée volumique nominale de près de 25 t/d par m³ de volume utile du four, soit environ 10 fois celle des fours classiques.

Mettant à profit l'avantage qui en résulte quant à la rapidité de réponse de l'installation, notamment lors des modifications du mélange vitrifiable, il a été procédé avec succès à des essais de fabrication de verres colorés, notamment de verres au sélénium et de verres oxydés renfermant à titre d'agents colorants des oxydes de fer, chrome, manganèse, nickel, cuivre, cobalt, etc., seuls ou en combinaison, en utilisant le moussage convectif selon l'invention.

Il a été noté, d'une manière générale, à propos des conditions correspondant à ce mode de fonctionnement, que le temps de passage au travers du seul compartiment 23, déterminé de même manière que ci-dessus, est de l'ordre de 20 minutes. Il est remarquable que le fonctionnement optimal de l'installation, selon le procédé de l'invention, n'est obtenu que dans une gamme de tirées correspondant à un temps de passage dans ledit compartiment 23 défini de manière relativement étroite autour de cette valeur, compris généralement entre 15 et 40 minutes et de préférence entre 16 et 25 minutes. En dehors de cette gamme, on observe une dégradation de l'affinage. Il n'est possible de retrouver une qualité d'affinage satisfaisante qu'en réduisant plus encore et très considérablement la tirée, par exemple de l'ordre d'un coefficient 0,1 par rapport à la tirée nominale. Un tel effet se confirme donc être très spécifique du processus de moussage expansif utilisé par le procédé de l'invention, tel qu'il était décrit dans le brevet FR-A-2 281 902.

## Exemple 2

Le dispositif précédemment décrit dans l'exemple 1 est utilisé maintenant pour fabriquer du silicate de potassium de rapport pondéral $SiO_2/K_2O$ égal à 2, à partir d'un mélange vitrifiable constitué de 666,6 kg de sable et de 489,4 kg de carbonate de potassium $K_2CO_3$ pour 1 000 kg de silicate.

Dans l'application qui est ainsi faite du dispositif de l'invention, le silicate n'ayant pas à être affiné au sens verrier du terme, et étant même susceptible de tirer profit d'une structure poreuse à froid, on ne cherche pas à provoquer le moussage convectif de la masse vitreuse.

Les conditions d'une production de 3 t/d de silicate étaient les suivantes :
- Fondoir mélangeur 11 :
  . hauteur de l'hélice : 0,07 m,
  . vitesse de l'hélice : 200 tours/min,
  . puissance aux électrodes : 130 kW,
  . température : 1 360 °C ;
- Compartiment 23 :
  . puissance aux électrodes : 18 kW,
  . température : 1 400 °C ;
- Compartiment 24 :
  . puissance aux électrodes : 15 kW,
  . température : 1 450 °C.

## Exemple 3

Une autre application a été faite du dispositif décrit à l'exemple 1, permettant d'élaborer un verre approprié pour la production de fibre d'isolation. Les moindres exigences en matière d'affinage permettent de conduire la fabrication, comme dans l'exemple 2, en évitant le moussage convectif dans le compartiment 23.

Le verre testé diffère principalement du verre silico-sodocalcique pour verre flotté de l'exemple 1 par ses teneurs élevées en oxydes alcalins et en $B_2O_3$ (respectivement 17 et 4,5 %), compensées par une réduction du taux de $SiO_2$, conduisant à une réduction importante de la viscosité, correspondant à un décalage d'au moins 100 °C de la courbe de viscosité.

Les conditions de production d'un tel verre, en maintenant une tirée de 3,6 t/d comme dans l'exemple 1, sont les suivantes, pour un affinage largement suffisant aux besoins du fibrage, de moins de 1 000 bulles de plus de 30 microns par kg de verre :
- Fondoir mélangeur 11 :
  . puissance dissipée : 117 kW,
  . température : 1 420 °C, correspondant à une viscosité d'environ 5 Pa · s (50 poises) ;
- Compartiment 23 :
  . puissance dissipée : 8 kW,
  . température : 1 375 °C ;
- Compartiment 24 :
  . puissance dissipée : 18,8 kW,
  . température : 1 420 °C.

Dans cet exemple, comme dans le précédent, on voit que l'étape déterminante est la vitrification, obtenue presque complètement dans le réacteur agité 11, et non l'affinage, acquis ensuite au prix d'une faible élévation, et éventuellement même par un maintien du niveau de la température, ces verres étant très peu visqueux.

## Revendications

1. Procédé de fabrication de verre fondu comprenant une étape de fusion sommaire (1 ; 11 ; 45) d'un mélange vitrifiable produisant une masse dite vitreuse brute présentant une viscosité au plus égale à 100 Pa · s (1 000 poises) et contenant un agent affinant, une étape dite d'affinage rapide (23 ; 60) soumettant ladite masse vitreuse brute à un échauffement (25-25' ; 59) réglé pour provoquer un moussage convectif de ladite masse vitreuse brute dans tout son volume avec un taux d'expansion de 1,5 au moins, et une étape de récupération et conditionnement (24) du verre affiné obtenu, caractérisé en ce que l'étape de fusion sommaire comporte une action de dispersion (2, 5 ; 17 ; 49) visant une mise en contact intime, en un mélange homogène, de matières vitrifiables solides (8) constituant une phase dite solide, avec des matières vitrifiables en fusion, constituant une phase fondue, ledit mélange formant un bain en fusion de ladite masse vitreuse brute, et en ce que, en vue de la soumettre à l'étape de moussage convectif (23 ; 60), ladite masse vitreuse brute est prélevée (21) à la partie inférieure dudit bain en fusion (11 ; 45) et introduite (21) à la partie inférieure d'un bain auquel est appliqué ledit échauffement provoquant le moussage convectif.

2. Procédé selon la revendication 1, caractérisé en ce que l'introduction (21) de ladite masse vitreuse brute dans le bain soumis au moussage convectif est effectuée selon un flux ascendant.

3. Procédé selon la revendication 1, caractérisé en ce que ladite action de dispersion comporte un intense brassage (15, 17 ; 49, 55a) du mélange.

4. Procédé selon la revendication 3, caractérisé en ce que ledit brassage est provoqué par une action mécanique (17, 19 ; 48, 49).

5. Procédé selon l'une des revendications précédentes, caractérisé en ce que les matières vitrifiables solides se présentent sous forme pulvérulente.

6. Procédé selon l'une des revendications précédentes, caractérisé en ce que lesdites phase solide (8) et phase fondue (4) sont de compositions différentes.

7. Procédé selon la revendication 6, caractérisé en ce que l'une des phases (8, 4) comprend essentiellement des porteurs de métaux alcalins et l'autre de métaux alcalino-terreux, la première étant de préférence la phase solide (8) et la seconde la phase fondue (4).

8. Procédé selon l'une des revendications 6 ou 7, caractérisé en ce que la phase liquide (4) comprend du laitier de haut fourneau.

9. Procédé selon l'une des revendications 6 à 8, caractérisé en ce que la phase solide (8) comprend un silicate alcalin artificiel présentant un rapport molaire $SiO_2/Na_2O$ compris entre 2 et 6.

10. Procédé selon l'une des revendications 6 à 9, caractérisé en ce que les composés gazogènes affinants à utiliser en vue du processus d'affinage rapide sont principalement introduits dans le mélange par l'intermédiaire de la phase solide (8).

11. Procédé selon l'une des revendications 1 à 5, caractérisé en ce que la phase fondue résulte du déroulement préalable, plus ou moins achevé, des réactions accompagnant la fusion de la phase solide, l'introduction (12 ; 41) de ladite phase solide et le prélèvement (21) de masse vitreuse s'effectuant de préférence en continu.

12. Procédé selon la revendication 11, caractérisé en ce que la phase solide est mise au contact de la phase fondue à sa partie supérieure.

13. Procédé selon l'une des revendications précédentes, caractérisé en ce que le mélange résultant de la mise en contact de la phase solide et de la phase fondue est chauffé par voie électrique (15 ; 49), de préférence par effet Joule direct.

14. Procédé selon la revendication 13, caractérisé en ce que le flux de la masse vitreuse brute admise dans le bain subissant ledit moussage convectif y est introduit selon une pente ascendante supérieure à 45°.

15. Procédé selon l'une des revendications précédentes, caractérisé en ce que l'extraction (31) de matière du bain subissant ledit moussage convectif s'applique à ses couches inférieures.

16. Procédé selon l'une quelconque des revendications 13 à 15, caractérisé en ce que l'échauffement de la masse vitreuse provoquant son moussage convectif, puis son maintien à la température maximale, couvrent une période de temps d'une durée moyenne comprise entre 15 et 40 minutes et de préférence entre 16 et 25 minutes, et de préférence encore de l'ordre de 20 minutes.

17. Procédé selon l'une des revendications précédentes, caractérisé en ce qu'une partie au moins des gaz émis par le bain en fusion (11 ; 45) est utilisée pour le préchauffage (43) de la phase solide, et en ce qu'une partie au moins des matières volatiles condensables émises par ledit bain sont retenues par ladite phase solide.

18. Procédé selon la revendication précédente, caractérisé en ce qu'une partie au moins des gaz utilisés pour le préchauffage (43) de la phase solide provient des réactions gazogènes accompagnant le moussage convectif (23 ; 60) de la masse en fusion.

19. Procédé selon l'une des revendications 15 à 18, caractérisé en ce qu'une partie du bain traité par moussage convectif (23 ; 60) est extraite par sa partie supérieure (58) pour être recyclée vers la zone de mise en contact (11 ; 45) des phases solide et fondue.

20. Dispositif de fabrication de verre fondu comprenant un fondoir (1 ; 11 ; 45) susceptible d'élaborer une masse vitreuse brute présentant une viscosité au plus égale à 100 Pa · s (1 000 poises) apte à subir un affinage rapide au moyen d'un échauffement réglé pour provoquer son moussage convectif selon un taux d'expansion de 1,5 au moins, dans tout son volume, un bassin allongé (23, 24 ; 60) muni dans sa partie amont (23 ; 60), recevant ladite masse vitreuse brute dudit fondoir, de moyens de chauffage (25-25' ; 59) capables de lui procurer ledit échauffement, caractérisé en ce que ledit fondoir comporte des moyens de dispersion (1 à 9 ; 12, 17 ; 49) visant la mise en contact intime, en un mélange homogène, de matières premières vitrifiables solides, constituant une phase dite solide, avec des matières vitrifiables en fusion constituant une phase dite fondue, et une cuve d'homogénéisation (11 ; 45) pour contenir ladite masse vitreuse brute, en un bain en fusion, provenant dudit mélange, ladite cuve (11 ; 45) comportant à sa partie inférieure un orifice d'un conduit (21) menant au bassin (23 ; 60) destiné au moussage convectif de ladite masse vitreuse brute, ledit conduit (21) débouchant dans la partie inférieure dudit bassin de moussage convectif (23 ; 60).

21. Dispositif selon la revendication 20, caractérisé en ce que ledit conduit (21) présente une pente ascendante de ladite cuve d'homogénéisation (11 ; 45) audit bassin de moussage convectif (23 ; 60).

22. Dispositif selon les revendications 20 ou 21, caractérisé en ce que lesdits moyens de dispersion comprennent, de préférence en combinaison, des moyens d'alimentation en phase fondue (1 à 3), recevant cette dernière d'une source appropriée, et des moyens d'alimentation en matières solides complémentaires (5 à 7), lesdits moyens d'alimentation étant de préférence munis de moyens de réglage de débit (6) pour ajuster les proportions des phases à mettre en contact.

23. Dispositif selon la revendication 22, caractérisé en ce que lesdits moyens d'alimentation comportent, pour la phase fondue, un déversoir (2), de préférence annulaire et émettant une nappe tubulaire (4), et pour les matières solides un répartiteur (5) les dispersant sur la nappe (4) de la phase fondue, de préférence à l'intérieur du tube formé par celle-ci.

24. Dispositif selon l'une des revendications 20 à 23, caractérisé en ce que ladite cuve d'homogénéisation (11 ; 45), recevant lesdites phases fondue et solide comprend des moyens de brassage (17, 18, 19 ; 48, 49).

25. Dispositif selon l'une des revendications 20 à 24, caractérisé en ce que la cuve d'homogénéisation (11 ; 45) comprend en combinaison des moyens de brassage (17, 18, 19 ; 48, 49) et des moyens d'alimentation (12, 41) en phase solide.

26. Dispositif selon l'une des revendications 20 à 25, caractérisé en ce que la cuve d'homogénéisation (11 ; 45) comprend des moyens de dissipation d'énergie (15 ; 55) agissant au sein même de la masse vitreuse, de préférence des amenées de courant électrique permettant le chauffage par effet Joule direct.

27. Dispositif selon la revendication 26, caractérisé en ce que les moyens de brassage (17 ; 49) sont disposés de manière à ce que le renouvellement de la matière au contact desdits moyens de dissipation d'énergie (15 ; 55) soit accéléré par rapport à celui résultant de la seule convection thermique naturelle, cette accélération étant de préférence maximale au niveau des régions où cette dissipation est elle-même maximale.

28. Dispositif selon l'une des revendications 24 à 27, caractérisé en ce que les moyens de brassage (17 ; 49) comportent au moins un organe mécanique animé d'un mouvement présentant au moins une composante de rotation d'axe vertical.

29. Dispositif selon l'une des revendications 20 à 28, caractérisé en ce que la cuve d'homogénéisation (11 ; 45) présente une forme générale de prisme droit d'axe vertical, et de section intérieure hexagonale.

30. Dispositif selon l'une des revendications 20 à 29, caractérisé en ce que le conduit (21) débouchant latéralement au niveau de la sole (16) de la cuve (11), et la reliant à la partie amont (23) du bassin de moussage convectif présente de l'amont vers l'aval une pente ascendante moyenne supérieure à 45°.

31. Dispositif selon l'une des revendications 26 à 30, caractérisé en ce que les amenées de courant (15 ; 55) sont au nombre de six, accouplées par paires, et disposées aux angles d'un hexagone, les deux amenées d'une des paires encadrant le conduit d'extraction (21).

32. Dispositif selon l'une des revendications 20 à 31, caractérisé en ce que ledit bassin allongé (23-24) est divisé, dans sa longueur, en compartiments (23, 24) dont la sole présente une altitude qui va en croissant de l'amont vers l'aval, la communication entre lesdits compartiments se faisant de préférence par une gorge surbaissée (31).

33. Dispositif selon l'une des revendications 25 à 32, caractérisé en ce que les moyens d'alimentation (41) en phase solide sont munis de moyens d'échange (42, 42a, 43, 46-46') à contre-courant avec les gaz et poussières émis par les matériaux au cours de l'élaboration du verre.

34. Dispositif selon la revendication 33, caractérisé en ce que lesdits moyens d'échange comportent des moyens d'aspiration (42, 42a) prélevant des gaz dans la région supérieure d'un conduit d'alimentation (43) raccordant une trémie (44) à la voûte (53, 54) de la cuve d'homogénéisation (45).

35. Dispositif selon la revendication 34, caractérisé en ce que ledit conduit (43) est muni d'au moins une vis sans fin (46, 46') et d'un organe, tel que registre (47) permettant d'en limiter le taux de remplissage par la phase solide.

36. Dispositif selon l'une des revendications 28 à 35, caractérisé en ce que l'organe mécanique de brassage (17 à 19 ; 48) comporte une hélice (17) présentant un nombre pair de pales, l'inclinaison d'une pale étant de sens inverse de celle de ses voisines immédiates.

37. Dispositif selon la revendication précédente, caractérisé en ce que l'hélice (17) comporte des moyens d'entraînement permettant une inversion périodique de sens de rotation.

38. Dispositif selon l'une des revendications 28 à 35, caractérisé en ce que l'organe mécanique de brassage comporte une tournante (48) munie d'au moins un doigt (49) de brassage, de préférence pourvu de pales amovibles, réglables en altitude.

39. Dispositif selon l'une des revendications 33 à 38, caractérisé en ce que la cuve (45) comporte un joint d'étanchéité (51, 52) tel qu'un lit de sable, de préférence fluidisé, intermédiaire entre pièces mobiles (18 ; 48) et voûte (13 ; 54) de la cuve de mélange (11 ; 45).

40. Dispositif selon l'une des revendications 31 à 39, caractérisé en ce que les amenées de courant (15) utilisées dans la cuve d'homogénéisation (45) sont du type suspendues, et qu'elles comportent de préférence des moyens de réglage en hauteur.

41. Dispositif selon la revendication 40, caractérisé en ce que les amenées de courant comprennent une partie (55a) destinée à être immergée dont la surface externe au moins est en un matériau bon conducteur électrique et de bonne résistance chimique, au contact du verre, de préférence du graphite ou du molybdène, la partie (55b) dont la surface est en partie exposée à l'atmosphère étant munie d'un revêtement externe de protection contre l'oxydation.

42. Dispositif selon l'une des revendications 24 à 41, caractérisé en ce qu'il comporte, entre la cuve d'homogénéisation (45) et ledit bassin allongé, une cloison creuse (56) munie de moyens permettant le réglage de la température de chacune de ses deux faces externes.

43. Dispositif selon l'une des revendications 20 à 42, caractérisé en ce que ledit bassin de moussage convectif (23 ; 60) présente une capacité correspondant à une durée moyenne de transit de la matière fondue comprise entre 15 et 40 minutes et de préférence de l'ordre de 20 minutes pour le débit nominal du dispositif.

44. Application d'un dispositif selon l'une des revendications 20 à 43 à l'élaboration de verres à très faibles viscosités, notamment des verres binaires de silicates alcalins, et certains boro-silicates alcalins, au cours de laquelle les phases de fusion et d'affinage sont conduites à des températures correspondant à des viscosités inférieures à 10 Pa · s (100 poises).

## Claims

1. A method of making molten glass comprising a rapid fusion stage (1 ; 11 ; 45) of a vitrifiable mixture producing a mass called a « crude vitreous mass » having a viscosity not exceeding 100 Pa · s (1 000 poises) and containing a refining agent, a stage called a « rapid refining stage » (23 ; 60) in which the crude vitreous mass is subjected to heating (25-25' ; 59) controlled to cause convective foaming in said crude vitreous mass throughout its volume with an expansion ratio of at least 1.5, and a recovery and conditioning stage (24) for the refined glass obtained, characterised in that the rapid fusion stage comprises a dispersion action (2, 5 ; 17 ; 49) intended to put in intimate contact, in a homogeneous mixture, the solid vitrifiable materials (8) forming a phase called a « solid phase », with vitrifiable materials in fusion, forming a molten phase, said mixture forming a fused bath of said crude vitreous mass and in that, in order to subject it to the convective foaming stage (23 ; 60) said crude vitreous mass is withdrawn (21) at the lower part of said fused bath (11 ; 45) and introduced (21) to the lower part of a bath at which said heating causing convective foaming is applied.

2. A method according to claim 1, characterised in that introduction (21) of said crude vitreous mass into the bath subjected to convective foaming is carried out in an ascending flow.

3. A method according to claim 1, characterised in that said dispersion action comprises intense stirring (15, 17 ; 49; 55a) of the mixture.

4. A method according to claim 3, characterised in that said stirring is caused by a mechanical action (17, 19 ; 48, 49).

5. A method according to any one of the preceding claims, characterised in that the solid vitrifiable materials are present in powder form.

6. A method according to any one of the preceding claims, characterised in that said solid phase (8) and molten phase (4) are of different compositions.

7. A method according to claim 6, characterised in that one of the phases (8, 4) comprises essentially alkaline metal carriers and the other alkaline earth metal carriers, preferably the first being the solid phase (8) and the second the molten phase (4).

8. A method according to claim 6 or 7, characterised in that the liquid phase (4) comprises blast furnace slag.

9. A method according to any one of claims 6 to 8, characterised in that the solid phase (8) comprises an artificial alkaline silicate having a $SiO_2/Na_2O$ molar ratio from 2 to 6.

10. A method according to any one of claims 6 to 9, characterised in that the gas generating refining compounds used for the rapid refining process are principally introduced into the mixture by the solid phase (8).

11. A method according to any one of claims 1 to 5, characterised in that the molten phase results from the previous carrying out, more or less completely, of the reactions accompaning fusion of the solid phase, introduction (12 ; 41) of said solid phase and withdrawal (21) of the vitreous mass, preferably carried out continuously.

12. A method according to claim 11, characterised in that the solid phase is put in contact with the molten phase at its upper part.

13. A method according to any one of the preceding claims, characterised in that the mixture resulting from putting in contact the solid phase and the liquid phase is heated electrically (15 ; 49), preferably by the direct Joule effect.

14. A method according to claim 13, characterised in that the flow of crude vitreous mass admitted to the bath subjected to said convective foaming is introduced at an angle of ascent greater than 45°.

15. A method according to any one of the preceding claims, characterised in that extraction (31) of material from the bath subjected to said convective foaming is applied to its lower layers.

16. A method according to any one of claims 13 to 15, characterised in that heating of the vitreous mass causing convective foaming, followed by holding at its maximum temperature, occupies a period of time of average duration from 15 to 40 minutes, preferably 16 to 25 minutes, most preferably about 20 minutes.

17. A method according to any one of the preceding claims, characterised in that at least part of the gas emitted by the fused bath (11 ; 45) is used for preheating (43) the solid phase, and in that at least part of the condensable volatile materials emitted by said bath are retained by said solid phase.

18. A method according to the preceding claim, characterised in that at least part of the gas used for preheating (43) of the solid phase is provided by gas-generating reactions accompanying convective foaming (23 ; 60) of the fused mass.

19. A method according to any one of claims 15 to 18, characterised in that part of the bath treated by convective foaming (23 ; 60) is extracted at its upper part (58) to be recycled to the zone (11 ; 45) in which the solid and molten phases are put into contact.

20. Apparatus for making molten glass comprising a melter (1 ; 11 ; 45) capable of making a crude vitreous mass having a viscosity not more than 100 Pa · s (1 000 poises) capable of undergoing rapid refining by means of heating controlled to cause convective foaming at an expansion ratio of at least 1.5, throughout its volume, and an elongate basin (23, 24 ; 60) provided in its upstream part (23 ; 60), receiving said crude vitreous mass from said melter, with heating means (25-25' ; 59) capable of carrying out said heating, characterised in that said melter comprises dispersion means (1 to 9 ; 12, 17 ; 49) for putting into intimate contact, in a homogeneous mixture, vitrifiable solid starting materials, forming a phase called « solid phase », with fused vitrifiable materials forming a phase called « liquid phase », and a homogenisation vessel (11 ; 45) to contain said crude vitreous mass, and a bath in fusion obtained from said mixture, said vessel (11 ; 45) comprising at its lower part an orifice of a duct (21) leading to the basin (23 ; 60) intended for convective foaming of the crude vitreous mass, said duct (21) opening into the lower part of said basin for convective foaming (23 ; 60).

21. Apparatus according to claim 20, characterised in that said duct (21) has an ascending slope from said homogenisation vessel (11 ; 45) to said vessel for convective foaming (23 ; 60).

22. Apparatus according to claim 20 or 21, characterised in that said dispersion means comprise, preferably in combination, means for feeding with molten phase (1 to 3), receiving the latter from a source, and complementary means for feeding solid materials (5 to 7), said feeding means preferably being provided with means for adjusting the feed rate (6) to adjust the proportions of the phases to be put in contact.

23. Apparatus according to claim 22, characterised in that said feed means comprise, for the molten phase, a weir (2), preferably annular and delivering a tubular stream (4), and for the solid materials a distributor (5) dispersing them on the stream (4) of molten phase, preferably inside the tube formed by the stream.

24. Apparatus according to any one of claims 20 to 23, characterised in that said homogenisation vessel (11 ; 45) receiving said molten and solid phases comprises stirring means (17, 18, 19 ; 48, 49).

25. Apparatus according to any one of claims 20 to 24, characterised in that the homogenisation vessel (11 ; 45) comprises in combination stirring means (17, 18, 19 ; 48, 49) and feed means (12, 41) for the solid phase.

26. Apparatus according to any one of claims 20 to 25, characterised in that the homogenisation vessel (11 ; 45) comprises energy dissipation means (15 ; 55) acting in the body of the vitreous, preferably leads for electric current allowing heating by the direct Joule effect.

27. Apparatus according to claim 26, characterised in that the stirring means (17 ; 49) are arranged so that renewal of the material in contact with said energy dissipating means (15 ; 55) is accelerated in comparison with that resulting from natural thermal convection only, this acceleration preferably being at a maximum at the level of the regions where this dissipation of energy is itself at a maximum.

28. Apparatus according to any one of claims 24 to 27, characterised in that the stirring means (17 ; 49) comprise at least one mechanical member driven in movement having at least one component of rotation about a vertical axis.

29. Apparatus according to any one of claims 20 to 28, characterised in that the homogenisation vessel (11 ; 45) has generally the shape of a right prism having a vertical axis, of hexagonal interior cross-section.

30. Apparatus according to any one of claims 20 to 29, characterised in that the duct (21) opening laterally at the level of the bottom (16) of the vessel (11), and connecting it to the upstream part (23) of the basin for convective foaming has, from upstream to downstream, an average ascending angle greater than 45°.

31. Apparatus according to any one of claims 26 to 30, characterised in that the current leads (15 ; 55) are six in number, coupled in pairs, and arranged at the angles of a hexagon, the two leads of one of the pairs surrounding the extraction duct (21).

32. Apparatus according to any one of claims 20 to 31, characterised in that said elongate basin (23-24) is divided, by length, into compartments (23, 24) of which the bottom has a height which increases from upstream to downstream, communication between said compartments preferably being through a lowered throat (31).

12

33. Apparatus according to any one of claims 25 to 32, characterised in that the feed means (41) for solid phase are provided with means for countercurrent exchange (42, 42a, 43, 46-46') with the gas and dust emitted by the materials during making of the glass.

34. Apparatus according to claim 33, characterised in that said exchange means comprises aspiration means (42, 42a) withdrawing gas in the upper region of a feed duct (43) connecting a funnel (44) to the roof (53, 54) of the homogenisation vessel (45).

35. Apparatus according to claim 34, characterised in that said duct (43) is provided with at least one endless screw (46, 46') and a member, such as a regulator, allowing limitation of the rate of replenishment by the solid phase.

36. Apparatus according to any one of claims 28 to 35, characterised in that the mechanical stirring member (17 to 19 ; 48) comprises a helix (17) having an even number of blades, the inclination of a blade being inverse to that of the immediately adjacent blades.

37. Apparatus according to the preceding claim, characterised in that the helix (17) comprises driving means allowing periodic reversal of its direction of rotation.

38. Apparatus according to any one of claims 28 to 35, characterised in that the mechanical stirring member comprises a rotor (48) provided with at least one stirring finger (49), preferably provided with movable blades adjustable in height.

39. Apparatus according to any one of claims 33 to 38, characterised in that the vessel (45) comprises an impervious joint (51, 52) such as a sand bed, preferably fluidised, between movable members (18 ; 48) and the roof (13 ; 54) of the mixing vessel (11 ; 45).

40. Apparatus according to any one of claims 31 to 39, characterised in that the current leads (15) used in the homogenisation vessel (45) are of the suspended type, and they preferably comprise means for varying their height.

41. Apparatus according to claim 40, characterised in that the current leads comprise a part (55a) intended to be immersed of which at least the exterior surface is of a material which is a good electrical conductor and has a good chemical resistance, in contact with the glass, preferably graphite or molybdenum, the part (55b) of which the surface is partly exposed to the atmosphere being provided with an external coating for protection against oxidation.

42. Apparatus according to any one of claims 24 to 41, characterised in that it comprises, between the homogenisation vessel (45) and said elongate basin, a hollow partition (56) provided with means allowing the temperature of both its two external surfaces to be regulated.

43. Apparatus according to any one of claims 20 to 42, characterised in that said basin for convective foaming (23 ; 60) has a capacity corresponding to an average duration of transit of the molten material from 15 to 40 minutes and preferably of the order of 20 minutes for the nominal rate of throughput of the apparatus.

44. Application of apparatus according to any one of claims 20 to 43 to manufacture of glasses having very low viscosities, notably binary glasses of alkaline silicates, and certain alkaline borosilicates, during which the fusion and refining phases are carried out at temperatures corresponding to viscosities less than 10 Pa · s (100 poises).

**Patentansprüche**

1. Verfahren zum Herstellen geschmolzenen Glases umfassend eine Stufe des beschleunigten Schmelzens (1 ; 11 ; 45) einer verglasbaren Mischung zur Herstellung einer Rohglasmasse mit einer Viskosität von höchstens 100 Pa · s (1 000 Poises) die ein Läuterungsmittel enthält, eine Stufe der schnellen Läuterung (23 ; 60), bei der man die Rohglasmasse einem geregelten Erhitzen (25-25' ; 59) unterwirft, um ein konvektives Aufschäumen der Rohglasmasse in ihrem gesamten Volumen mit einem Ausdehnungsverhältnis von mindestens 1,5 zu bewirken und eine Stufe der Rückgewinnung und Behandlung (24) des erhaltenen geläuterten Glases, dadurch gekennzeichnet, daß die Stufe des beschleunigten Schmelzens ein Dispergieren (2,5 ; 17 ; 49) umfaßt, bei dem man in einer homogenen Mischung feste verglasbare Substanzen (8), die eine feste Phase bilden, mit geschmolzenen verglasbaren Substanzen, die eine flüssige Phase bilden, in innige Berührung bringt, wobei die genannte Mischung ein Schmelzbad der genannten Rohglasmasse bildet und man die genannte Rohglasmasse, um sie der Stufe des konvektiven Aufschäumens (23 ; 60) zu unterwerfen, dem unteren Teil des genannten Schmelzbades (11 ; 45) entnimmt (21) und sie in den unteren Teil eines Bades einführt (21) das erhitzt wird, um das konvektive Aufschäumen zu bewirken.

2. Verfahren nach Anspruch 1, dadurch gekennzeichnet, daß das Einführen (21) der genannten Rohglasmasse in das Bad zum konvektiven Aufschäumen mit einem ansteigenden Fluß erfolgt.

3. Verfahren nach Anspruch 1, dadurch gekennzeichnet, daß das Dispergieren ein intensives Rühren (15, 17 ; 49, 55a) der Mischung einschließt.

4. Verfahren nach Anspruch 3, dadurch gekennzeichnet, daß das Rühren durch mechanische Einwirkung erfolgt (17, 19 ; 48, 49).

5. Verfahren nach einem der vorhergehenden Ansprüche, dadurch gekennzeichnet, daß die festen verglasbaren Substanzen in Pulverform vorhanden sind.

6. Verfahren nach einem der vorhergehenden Ansprüche, dadurch gekennzeichnet, daß die genannte feste Phase (8) und die flüssige Phase (4) von verschiedener Zusammensetzung sind.

7. Verfahren nach Anspruch 6, dadurch gekennzeichnet, daß eine der Phasen (8, 4) im wesentlichen Träger von Alkalimetallen und die andere von Erdalkalimetallen umfaßt, wobei die erstere vorzugsweise die feste Phase (8) und die zweite die geschmolzene Phase (4) ist.

8. Verfahren nach einem der Ansprüche 6 oder 7, dadurch gekennzeichnet, daß die flüssige Phase (4) Hochofenschlacke umfaßt.

9. Verfahren nach einem der Ansprüche 6 bis 8, dadurch gekennzeichnet, daß die feste Phase (8) ein synthetisches Alkalisilikat mit einem Molverhältnis $SiO_2/Na_2O$ zwischen 2 und 6 umfaßt.

10. Verfahren nach einem der Ansprüche 6 bis 9, dadurch gekennzeichnet, daß die beim raschen Läutern benutzten gasförmigen Läuterungsmittel grundsätzlich mit Hilfe der festen Phase (8) in die Mischung eingeführt werden.

11. Verfahren nach einem der Ansprüche 1 bis 5, dadurch gekennzeichnet, daß die geschmolzene Phase aus dem vorläufigen, mehr oder weniger vollständigen Ablauf der Umsetzungen resultiert, die das Schmelzen der festen Phase begleiten, wobei das Einführen (12 ; 41) der genannten festen Phase und die Entnahme (21) der Glasmasse vorzugsweise kontinuierlich erfolgen.

12. Verfahren nach Anspruch 11, dadurch gekennzeichnet, daß die feste Phase mit der flüssigen Phase in deren oberem Teil in Berührung gebracht wird.

13. Verfahren nach einem der vorhergehenden Ansprüche, dadurch gekennzeichnet, daß die Mischung, die durch in Berührung bringen der festen Phase und der geschmolzenen Phase erhalten wird, elektrisch (15 ; 49) erhitzt wird, vorzugsweise durch den direkten Joule-Effekt.

14. Verfahren nach Anspruch 13, dadurch gekennzeichnet, daß der Fluß der Rohglasmasse, die in das Bad zum konvektiven Aufschäumen eintritt, dort über eine um mehr als 45° ansteigende Schräge eingeführt wird.

15. Verfahren nach einem der vorhergehenden Ansprüche, dadurch gekennzeichnet, daß die Entnahme (31) von Material aus dem Bad zum konvektiven Aufschäumen bei den inneren Schichten erfolgt.

16. Verfahren nach irgendeinem der Ansprüche 13 bis 15, dadurch gekennzeichnet, daß das Erhitzen der Glasmasse zum konvektiven Aufschäumen und dann zum Halten bei der Maximaltemperatur eine Zeitspanne mittlerer Dauer von 15 bis 40 min, vorzugsweise von 16 bis 25 min und noch bevorzugter von etwa 20 min umfaßt.

17. Verfahren nach einem der vorhergehenden Ansprüche, dadurch gekennzeichnet, daß mindestens ein Teil des aus dem Schmelzbad (11 ; 45) austretenden Gases zum Vorheizen (43) der festen Phase benutzt wird und daß mindestens ein Teil der aus dem genannten Bad austretenden flüchtigen kondensierbaren Substanzen von der genannten festen Phase zurückgehalten wird.

18. Verfahren nach dem vorhergehenden Anspruch, dadurch gekennzeichnet, daß mindestens ein Teil des zum Vorheizen (43) der festen Phase benutzten Gases aus den Gasreaktionen stammt, die das konvektive Aufschäumen (23 ; 60) der geschmolzenen Masse begleiten.

19. Verfahren nach einem der Ansprüche 15 bis 18, dadurch gekennzeichnet, daß ein Teil des durch konvektives Aufschäumen (23 ; 60) behandelten Bades von seinem oberen Teil (58) entnommen wird, um ihn in die Zone des in Berührung bringens (11 ; 45) der festen und geschmolzenen Phase zurückzuführen.

20. Vorrichtung zum Herstellen einer Glasschmelze umfassend einen Schmelzkessel (1 ; 11 ; 45), in dem man eine Rohglasmasse mit einer Viskosität von höchstens 100 Pa · s (1 000 Poises) erschmelzen kann, die man mit einem geregelten Erhitzen in ihrem gesamten Volumen mit einem Ausdehnungsverhältnis von mindestens 1,5 zum konvektiven Aufschäumen bringen kann, um eine rasche Läuterung zu erreichen, ein verlängertes Bassin (23, 24 ; 60), das in seinen oberen Teil (23 ; 60), der die Rohglasschmelze vom Schmelzkessel aufnimmt, mit einer Heizeinrichtung (25-25' ; 59) versehen ist, die das genannte Erhitzen vornehmen kann, dadurch gekennzeichnet, daß der Schmelzkessel eine Dispersionseinrichtung (1 bis 9 ; 12, 17 ; 49), mit der in einer homogenen Mischung die ersten festen verglasbaren Substanzen, die eine feste Phase bilden, mit geschmolzenen verglasbaren Substanzen, die eine geschmolzene Phase bilden, in innigen Kontakt gebracht werden und eine Homogenisierungswanne (11 ; 45) umfaßt, um die aus der genannten Mischung herrührende Rohglasmasse in einem Schmelzbad aufzunehmen, wobei die genannte Wanne (11 ; 45) in ihrem unteren Teil eine Durchlaßöffnung (21) aufweist, die in das für das konvektive Aufschäumen der Rohglasmasse bestimmte Bassin (23 ; 60) führt, wobei der genannte Durchgang (21) in den unteren Teil des genannten Bassins zum konvektiven Aufschäumen (23 ; 60) mündet.

21. Vorrichtung nach Anspruch 20, dadurch gekennzeichnet, daß der genannte Durchgang (21) eine ansteigende Neigung der Homogenisierungswanne (11 ; 45) zum Bassin zum konvektiven Aufschäumen (23 ; 60) aufweist.

22. Vorrichtung nach den Ansprüchen 20 oder 21, dadurch gekennzeichnet, daß die genannte Dispersionseinrichtung, vorzugsweise in Kombination, Zufuhreinrichtungen für die geschmolzene Phase (1 bis 3), die aus einer geeigneten Quelle erhalten wird und komplementäre Zufuhreinrichtungen für die festen Substanzen (5 bis 7) umfaßt, wobei die genannten Zufuhreinrichtungen vorzugsweise mit Durchsatzreglern (6) versehen sind, um die Anteile der in Berührung zu bringenden Phasen einzustellen.

23. Vorrichtung nach Anspruch 22, dadurch gekennzeichnet, daß die genannten Zufuhreinrichtungen für die geschmolzene Phase einen vorzugsweise ringförmigen Überlauf (2), von dem ein rohrförmiger

**0 135 446**

Mantel (4) ausgeht und für die festen Substanzen einen Verteiler (5) umfassen, der letztere auf dem Mantel (4) der geschmolzenen Phase, vorzugsweise im Inneren des dadurch gebildeten Rohres verteilt.

24. Vorrichtung nach einem der Ansprüche 20 bis 23, dadurch gekennzeichnet, daß die genannte Homogenisierungswanne (11 ; 45), die die geschmolzene und feste Phase aufnimmt, Rühreinrichtungen (17, 18, 19 ; 48, 49) umfaßt.

25. Vorrichtung nach einem der Ansprüche 20 bis 24, dadurch gekennzeichnet, daß die Homogenisierungswanne (11 ; 45) in Kombination die Rühreinrichtungen (17, 18, 19 ; 48, 49) und die Zufuhreinrichtungen (12, 41) für die feste Phase umfaßt.

26. Vorrichtung nach einem der Ansprüche 20 bis 25, dadurch gekennzeichnet, daß die Homogenisierungswanne (11 ; 45) Einrichtungen zum Verteilen der Energie (15 ; 55) umfaßt, die in der Glasmasse selbst wirksam sind, vorzugsweise Stromzuleitungen, die ein Erhitzen durch den direkten Joule-Effekt gestatten.

27. Vorrichtung nach Anspruch 26, dadurch gekennzeichnet, daß die Rühreinrichtungen (17 ; 49) so angeordnet sind, daß die Erneuerung der Materie, die sich im Kontakt mit der genannten Einrichtung zur Energieverteilung (15 ; 55) befindet, im Vergleich zu der, die sich allein aufgrund der natürlichen thermischen Konvektion ergibt, beschleunigt wird, wobei diese Beschleunigung vorzugsweise in der Höhe der Bereiche maximal ist, in denen diese Verteilung selbst maximal ist.

28. Vorrichtung nach einem der Ansprüche 24 bis 27, dadurch gekennzeichnet, daß die Rühreinrichtungen (17 ; 49) mindestens ein mechanisches Teil umfassen, das durch eine Bewegung angeregt wird, die mindestens eine Komponente der Rotation um die vertikale Achse umfaßt.

29. Vorrichtung nach einem der Ansprüche 20 bis 28, dadurch gekennzeichnet, daß die Homogenisierungswanne (11 ; 45) eine Form allgemein eines aufrechten Prismas mit vertikaler Achse und einen hexagonalen inneren Querschnitt aufweist.

30. Vorrichtung nach einem der Ansprüche 20 bis 29, dadurch gekennzeichnet, daß der Durchgang (21), der seitlich in Höhe des Bodens (16) der Wanne (11) einmündet und diese mit dem oberen Teil (23) des Bassins zum konvektiven Aufschäumen verbindet, von stromauf nach stromab eine im Mittel um mehr als 45° ansteigende Schräge aufweist.

31. Vorrichtung nach einem der Ansprüche 26 bis 30, dadurch gekennzeichnet, daß sechs Stromzuleitungen (15 ; 55), die paarweise gekoppelt sind, in den Ecken eines Sechseckes angeordnet sind, wobei die beiden Stromzuleitungen des einen Paares den Ausgangskanal (21) einfassen.

32. Vorrichtung nach einem der Ansprüche 20 bis 31, dadurch gekennzeichnet, daß das langgestreckte Bassin (23, 24) der Länge nach in Abteile (23, 24) unterteilt ist, deren Boden eine in Strömungsrichtung zunehmende Höhe aufweist, wobei die Verbindung zwischen den genannten Abteilen vorzugsweise durch einen flachen Durchlaß (31) erfolgt.

33. Vorrichtung nach einem der Ansprüche 25 bis 32, dadurch gekennzeichnet, daß die Zufuhreinrichtung (41) für die feste Phase mit Gegenstrom-Austauscheinrichtungen (42, 42a, 43, 46 und 46') für Gas und Staub ausgestattet ist, die während der Behandlung des Glases von den Substanzen abgegeben werden.

34. Vorrichtung nach Anspruch 33, dadurch gekennzeichnet, daß die genannte Austauscheinrichtung Ansaugeinrichtungen (42, 42a) umfaßt, die Gas aus dem oberen Bereich einer Zufuhrleitung (43) abziehen, die einen Trichter (44) mit dem Oberteil (53, 54) der Homogenisierungswanne (45) verbindet.

35. Vorrichtung nach Anspruch 34, dadurch gekennzeichnet, daß die genannte Leitung (43) mit mindestens einer Förderschnecke (46, 46'), und einem Glied, wie dem Schieber (47) versehen ist, der es gestattet, die Zufuhrquote an fester Phase zu begrenzen.

36. Vorrichtung nach einem der Ansprüche 28 bis 35, dadurch gekennzeichnet, daß der mechanische Rührer (17 bis 19 ; 48) einen Propeller (17) umfaßt, der eine Anzahl von Schaufelpaaren aufweist, wobei die Neigung einer Schaufel entgegengesetzt der seiner unmittelbaren Nachbarn ist.

37. Vorrichtung nach dem vorhergehenden Anspruch, dadurch gekennzeichnet, daß der Propeller (17) Antriebseinrichtungen umfaßt, die eine periodische Umkehr des Rotationssinnes gestatten.

38. Vorrichtung nach einem der Ansprüche 28 bis 35, dadurch gekennzeichnet, daß der mechanische Rührer eine mit mindestens einem Rührfinger (49), der vorzugsweise höhenverstellbare, abnehmbare Schaufeln aufweist, versehene Dreheinrichtung (48) umfaßt.

39. Vorrichtung nach einem der Ansprüche 33 bis 38, dadurch gekennzeichnet, daß die Wanne (45) eine Dichtung (51, 52), wie ein vorzugsweise fluidisiertes Sandbett, zwischen beweglichen Teilen (18 ; 48) und der Decke (13 ; 54) der Mischwanne (11 ; 45) umfaßt.

40. Vorrichtung nach einem der Ansprüche 31 bis 39, dadurch gekennzeichnet, daß die in der Homogenisierungswanne (45) benutzten Stromzuleitungen (15) hängend angeordnet sind und daß sie vorzugsweise Einrichtungen zum Regeln der Höhe umfassen.

41. Vorrichtung nach Anspruch 40, dadurch gekennzeichnet, daß die Stromzuleitungen einen zum Eintauchen bestimmten Abschnitt (55a) umfassen, von dem zumindest die äußere Oberfläche aus einem Material besteht, das gut elektrisch leitet und im Kontakt mit Glas eine gute chemische Beständigkeit aufweist, vorzugsweise Graphit oder Molybdän, wobei der Abschnitt (55b), dessen Oberfläche teilweise der Atmosphäre ausgesetzt ist, mit einem äußeren Schutzmantel gegen Oxidation versehen ist.

42. Vorrichtung nach einem der Ansprüche 24 bis 41, dadurch gekennzeichnet, daß sie zwischen der Homogenisierungswanne (45) und dem länglichen Bassin ein hohle Zwischenwand (56) umfaßt, die mit

15

einer Einrichtung versehen ist, die es gestattet, die Temperatur jeder ihrer beiden Außenseiten zu regeln.

43. Vorrichtung nach einem der Ansprüche 20 bis 42, dadurch gekennzeichnet, daß das Bassin zum konvektiven Aufschäumen (23 ; 60) eine Kapazität aufweist, die einer mittleren Durchgangszeit des geschmolzenen Materials von 15 bis 40 Minuten, vorzugsweise etwa 20 Minuten, für den Nominaldurchsatz der Vorrichtung entspricht.

44. Verwendung einer Vorrichtung nach einem der Ansprüche 20 bis 43 zum Schmelzen von Glas sehr geringer Viskosität, insbesondere binärer Alkalisilikat- und bestimmter Alkaliborsilikatgläser, bei dem das Schmelzen und Läutern bei Temperaturen ausgeführt wird, die Viskositäten von weniger als 10 Pa · s (100 Poises) entsprechen.

FIG.1

FIG.2

FIG.3a

FIG.3b

FIG.3c

FIG.4